# EUROPÄISCHE PATENTSCHRIFT

(11) **EP 1 970 320 B1**
(45) Veröffentlichungstag und Bekanntmachung des Hinweises auf die Patenterteilung: **26.01.2011**
(21) Anmeldenummer: 07005392.1
(22) Anmeldetag: 15.03.2007
(51) Int. Cl.: B65D 23/08, C09D 167/00, C08J 7/04, B41M 1/00

(54) **Photobedruckbare Hohlkörper, Verfahren zur Aufbringung eines Photodrucks und Verwendung der Hohlkörper**
Photo printable hollowware, method for applying a photo print and use of hollowware
Corps creux photo imprimable, procédé d'application d'une impression photographique et utilisation du corps creux

(43) Veröffentlichungstag der Anmeldung: 17.09.2008
(73) Patentinhaber: Lange, Romanus, 37434 Gieboldehausen (DE)
(72) Erfinder: Lange, Romanus, 37434 Gieboldehausen (DE)
(74) Vertreter: Koepe, Gerd L.

(56) Entgegenhaltungen:
- EP-A- 1 089 126
- DATABASE WPI Week 200517 Derwent Publications Ltd., London, GB; AN 2005-156310 XP002447978 & JP 2005 036152 A (TOYO INK MFG CO LTD) 10. Februar 2005 (2005-02-10)

## Beschreibung

Die Erfindung betrifft photobedruckbare Hohlkörper und betrifft beispielsweise photobedruckbare Flaschen mit einer Außenfläche aus Kunststoff, Metall, einem Metall-Kunststoff-Verbund oder einer Metall-Kunststoff-Mischung. Die Erfindung betrifft weiter ein Verfahren, mit dem ein Photodruck photorealistisch, also verzerrungsfrei, auf einen Hohlkörper wie eine Flasche aufgebracht werden kann. Weiter betrifft die vorliegende Erfindung die Verwendung von Hohlkörpern wie beispielsweise Flaschen, mit einer Außenfläche aus Kunststoff, Metall, einem Metall-Kunststoff-Verbund oder einer Metall-Kunststoff-Mischung, die auf ihrer Außenseite mit einem photogenauen Druck versehen sind.

Es sind im Stand der Technik Hohlkörper wie beispielsweise Flaschen bekannt, die verschiedenen Zwecken dienen. Insbesondere kennt man Hohlkörper mit Verschlüssen zum Aufbewahren, Transportieren, Kühlen oder Erhitzen von fluiden Medien, wie beispielsweise Flüssigkeiten, und es haben sich für diesen Zweck Flaschen besonders bewährt.

Die vorliegende Erfindung, wiewohl für Hohlkörper verschiedener Form geeignet und gemacht, wird nachfolgend anhand von Flaschen als Hohlkörpern, insbesondere Trinkflaschen, beispielhaft erläutert, ohne auf diese beschränkt zu sein.

Sollen fluide Medien wie beispielsweise Flüssigkeiten aufbewahrt, transportiert, verwendet (z. B. zum Ausschenken, Trinken, Kühlen, Wärmen etc.) werden, hat sich - natürlich in Abhängigkeit vom Verwendungszweck, vom fluiden/flüssigen Medium, von der Art des Transports und von dem Ort der Aufbewahrung - ein stabiles, nicht zerbrechliches Material wie beispielsweise Metall oder Kunststoff für Hohlkörper wie beispielsweise Flaschen bewährt. Verschlüsse werden in verschiedenster Form bereitgestellt und umfassen mit Gewinden versehene Verschlussstopfen, die in das obere Ende des Flaschenhalses eingeschraubt (Flasche: Innengewinde; Verschluß: Außengewinde) oder auf den Flaschenhals aufgeschraubt werden können (Flasche: Außengewinde; Verschluß: Innengewinde). Natürlich sind auch andere Verschluß-Formen (Stopfen aus elastischen Materialien wie beispielsweise Kautschuk oder Silikon) oder Natur-Materialien (z. B. Kork) denkbar und in Anwendung.

Trinkflaschen oder Flaschen zur Aufbewahrung und zum Transport von Flüssigkeiten beim Sport, beim Bergsteigen, auf Reisen, in Fahrzeugen etc. umfassen heutzutage häufig einen Korpus aus Metall oder Kunststoff, der den jeweiligen Verhältnissen (Größe, Volumen, Unterbringungsmodus etc.) angepasst ist, und einen Innenteil, der den technischen Erfordernissen entsprechend ausgestaltet ist. Letztere umfassen beispielsweise (jedoch nicht beschränkend) Beständigkeit gegen Inhaltsstoffe des Trinkguts in dem Hohlkörper bzw. der Flasche (z. B. Beständigkeit gegen Fruchtsäuren oder Kohlensäure), thermische Isolationsfähigkeit (Warm- oder Kalt-Halten des Trinkguts), Dichtheit (Flüssigkeit darf nicht in die Umgebung bzw. in den Lager- bzw. Transport-Ort (Kleidung, Rucksack etc.) auslaufen), und weitere Erfordernisse.

So ausgefeilt das "Innenleben" des Hohlkörpers bzw. der Flasche ist, um allen Anforderungen zu genügen, so wenig ansprechend ist das Äußere eines solchen Hohlkörpers bzw. einer solchen Flasche. Im besten Fall ist der Außenkörper mit einem stoßbeständigen Überzug versehen; häufig beherrscht jedoch die blanke Kunststoff- bzw. Metall-Oberfläche das Aussehen. Optische Aspekte spielen (wegen der im Vordergrund stehenden Funktionalität des Hohlkörpers bzw. der Flasche) keine oder nur eine untergeordnete Rolle.

Die vorliegende Erfindung versucht, dem abzuhelfen. Insbesondere war es Aufgabe der vorliegenden Erfindung, einen Hohlkörper und insbesondere eine Flasche mit einer Außenfläche aus Kunststoff, Metall, einem Metall-Kunststoff-Verbund oder einer Metall-Kunststoff-Mischung (mit einem allen Anforderungen an die Aufbewahrung und den Transport von Flüssigkeiten erfüllenden "Innenleben", das nicht Teil der vorliegenden Erfindung ist) bereitzustellen, der gestaltet und individualisiert werden kann. Insbesondere war es Aufgabe der Erfindung, einen Hohlkörper und insbesondere eine Flasche mit einer Außenfläche aus Kunststoff, Metall, einem Metall-Kunststoff-Verbund oder einer Metall-Kunststoff-Mischung bereitzustellen, dessen/deren Außenfläche mit Aufdrucken, insbesondere mit photogenauen Aufdrucken, versehen werden kann, die klar und unverwischt sind. Weiter war es Aufgabe der Erfindung, einen Hohlkörper und insbesondere eine Flasche mit einer Außenfläche aus Kunststoff, Metall, einem Metall-Kunststoff-Verbund oder einer Metall-Kunststoff-Mischung bereitzustellen, dessen/deren Außenfläche für Werbezwecke mit klaren Bildern oder Logos in Photographie-Qualität versehen werden kann. Aufgabe der Erfindung war es weiter, einen Hohlkörper und insbesondere eine Flasche mit einer Außenfläche aus Kunststoff, Metall, einem Metall-Kunststoff-Verbund oder einer Metall-Kunststoff-Mischung bereitzustellen, dessen/deren Außenfläche durch unentfernbares Fixieren von photogenauen Drucken individualisierend gestaltet werden kann.

Weitere Aufgaben und Vorteile ergeben sich aus der nachfolgenden Beschreibung der Erfindung und ihrer bevorzugten Ausführungsformen.

EP 1 089 126 A beschreibt eine Verpackung, enthaltend eine Photobeschichtung, worin die Außenfläche aus einem Polymer besteht und die Verpackung eine Flasche ist.

JP 2005 036152 A offenbart eine Photogravur-Offset-Beschichtung für Dosen und Flaschen, die ein Beschichtungsmittel und eine Außenfläche aus Metall oder Kunststoff enthält.

Die Erfindung betrifft einen photobeaufschlagten Hohlkörper mit einer Außenfläche aus Kunststoff, aus Metall, einem Metall-Kunststoff-Verbund oder aus einer Metall-Kunststoff-Mischung, einer außen auf zumindest einem Teil der Außenfläche aufgebrachten Beschichtung aus einem Polymer-Pulver oder einer Metall-Polymer-Pulver-Mischung und einer außen auf zumindest einem Teil der Beschichtung aufgebrachten und thermofixierten Feststoff-Phototransfer-Schicht.

Bevorzugte Ausführungsformen des erfindungsgemäßen photobeaufschlagten Hohlkörpers sind in den abhängigen Ansprüchen 2 bis 10 beansprucht.

Die Erfindung betrifft auch ein Verfahren zum Herstellen eines photobeaufschlagten Hohlkörpers entsprechend der nachfolgenden detaillierten Beschreibung, wobei das Verfahren die folgenden Schritte umfaßt:
- Beschichten eines Hohlkörpers mit einer Außenfläche aus Kunststoff, aus Metall, einem Metall-Kunststoff-Verbund oder aus einer Metall-Kunststoff-Mischung auf zumindest einem Teil der Außenfläche mit einer Beschichtung aus einem Polymer-Pulver oder einer Metall-Polymer-Pulver-Mischung;
- Erstellen des Photo-Transfers durch Ausdrucken eines photographischen Motivs mittels üblicher Technologie, vorzugsweise unter Verwendung Siliconöl-haltiger Fixierung oder eines EA - (Emulsion Aggregation)
- Trockentoners auf einem Träger unter Bereitstellung einer Feststoff Phototransfer-Schicht;
- mechanisches Fixieren des mit dem photographischen Motiv beaufschlagten Trägers auf zumindest einem Teil der Beschichtung ;
- Wärmefixieren der Feststoff-Phototransfer-Schicht des photographischen Motivs auf dem Teil der Beschichtung;
- Abziehen des Trägers von der auf der Beschichtung
   fixierten Feststoff-Phototransfer-Schicht; und
- Einbrennen der Feststoff-Phototransfer-Schicht.

Bevorzugte Ausführungsformen des erfindungsgemäßen Verfahrens sind in den abhängigen Ansprüchen 12 bis 25 beansprucht.

Die Erfindung betrifft auch die Verwendung des nach dem nachfolgend im Detail beschriebenen Verfahren herstellbaren Hohlkörpers für Werbe-Zwecke, zur Individualisierung und für Geschenk-Zwecke.

Die Erfindung wird nachfolgend unter Bezugnahme auf die Figuren im Einzelnen erläutert. Die entsprechende Beschreibung und auch die Figuren sind jedoch nur als beispielhaft zu verstehen und sollen zum besseren Verständnis der Erfindung beitragen, ohne dass die Erfindung als auf die beispielhaften Erläuterungen beschränkt verstanden werden soll.

In den Figuren zeigen:
Figur 1A und Figur 1B zeigen jeweils einen Hohlkörper 1, wie er Ausgangspunkt der vorliegenden Erfindung ist, d. h. ohne die Beaufschlagung mit einem Photo oder einem photographisch realisierbaren Motiv.
Figur 2 schematisch die Beaufschlagung eines Hohlkörpers 1, der eine Außenfläche 10 aus Kunststoff aufweist, mit einer thermofixierten Feststoff-Phototransfer-Schicht 30 gemäß dem Stand der Technik; und
Figur 3 schematisch die Beaufschlagung eines Hohlkörpers 1, der eine auf der Außenfläche 10 aufgebrachten Beschichtung 20 aus einem Polymer-Pulver aufweist, mit einer thermofixierten Feststoff-Phototransfer-Schicht 30.

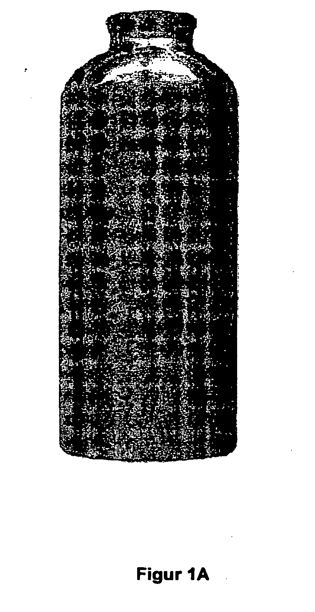

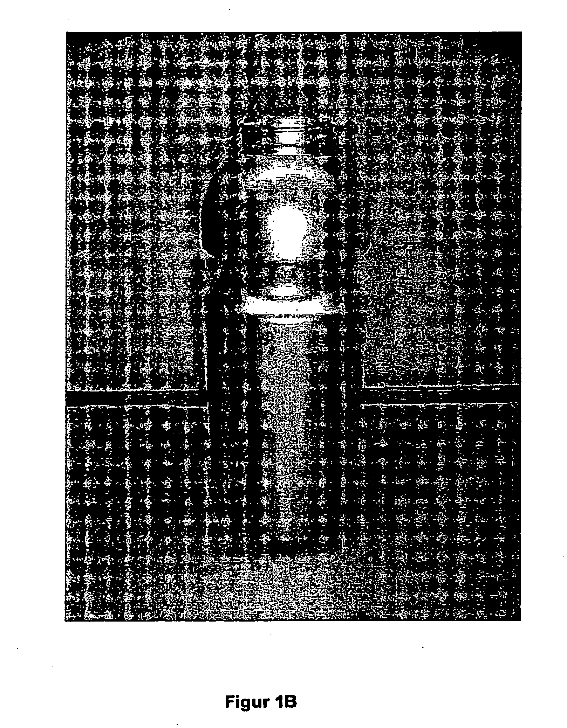

Es wird nun auf die Figuren Bezug genommen. Die Figuren 1A und 1B zeigen jeweils einen Hohlkörper 1, wie er Ausgangspunkt der vorliegenden Erfindung ist, d. h. ohne die Beaufschlagung mit einem Photo oder einem photographisch realisierbaren Motiv. Die beiden in den Figuren 1A und 1B dargestellten Hohlkörper sind beispielhaft zur Erläuterung der Erfindung dargestellte Flaschen, wobei Figur 1A eine Flasche mit einer Metall-Oberfläche zeigt und Figur 1B eine Flasche aus einem Kunststoff, also mit einer Außenfläche aus Kunststoff, zeigt.

Unter dem Begriff "Hohlkörper" 1, wird in der vorliegenden Beschreibung und in den Patentansprüchen ein Hohlkörper 1 verstanden, wie er zum Aufbewahren, Transportieren, Verwenden (z.B. Trinken, Kühlen, Erwärmen usw.) einer fluiden Substanz wie beispielsweise einer Flüssigkeit üblicherweise verwendet wird. Ein solcher Hohlkörper 1 kann beliebige Größe und Form annehmen, ohne dass dies für die Erfindung als einschränkend anzusehen ist, und hat üblicherweise eine Außenfläche 10 oder weist eine Beschichtung auf der Außenfläche 10 auf, die ein Material umfasst oder aus einem Material besteht, das gewählt ist aus Metall und Kunststoff (einschließlich solcher Materialien, die ein mit einem Kunststoff beschichtetes oder beaufschlagtes Material aus Metall oder einen mit einem Metall beschichteten oder beaufschlagten Kunststoff darstellen).

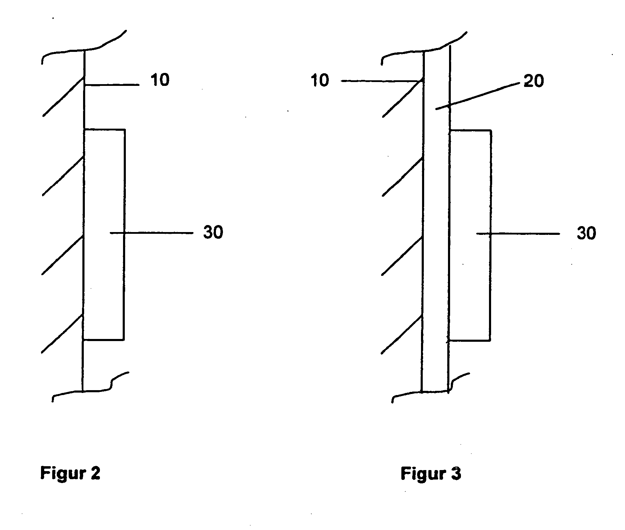

Solche Hohlkörper 1 können beispielsweise (ohne Beschränkung) die Form einer Flasche annehmen. Da es erfindungsgemäß auf das "Innenleben" des Hohlkörpers 1 nicht ankommt (dies in den Figuren 2 und 3 durch die Schraffur neben der mit "10" bezeichneten Außenfläche gezeigt), weil alle Schritte zu seiner Herstellung bzw. Zurichtung auf der Außenfläche stattfinden, kann der Hohlkörper 1 bzw. die Flasche 1 gemäß der Erfindung in seinem/ihrem Innern beliebig gestaltet sein, ohne dass die Erfindung hierdurch beschränkt wird. So kann der Hohlkörper 1 bzw. die Flasche 1 gemäß der Erfindung eine übliche Trink- oder Transportflasche sein, die in ihrem Innern mit üblichen und dem Fachmann als solchen bekannten und daher frei wählbaren Einrichtungen 40 zum Halten oder Aufbewahren oder Transportieren oder Isolieren einer fluiden Substanz wie beispielsweise einer Flüssigkeit versehen ist und gegebenenfalls zusätzlich oder stattdessen eine übliche Verschluß-Einrichtung 45 aufweist. In besonderen, die Erfindung nicht beschränkenden Ausführungsformen können die Einrichtungen 40 zum Halten oder Aufbewahren oder Transportieren einer fluiden Substanz wie beispielsweise einer Flüssigkeit sein: Einrichtungen zur Sicherung einer Beständigkeit des Innern des Hohlkörpers 1 bzw. der Flasche 1 gegen Inhaltsstoffe des Trinkguts in dem Hohlkörper bzw. der Flasche (z. B. Beschichtungen zum Erreichen von Beständigkeit gegen Fruchtsäuren oder Kohlensäure), thermische Isolation liefernde Einrichtungen (zum Warm- oder Kalt-Halten des Trinkguts während der Lagerung oder des Transports) wie beispielsweise doppelte Gefäßwände mit Freiheit von Wärme leitenden Materialien (einschließlich Luft) zwischen den Gefäßwänden und/oder Verspiegelung, Dichtheit des Verschlusses garantierende Einrichtungen (zum Verhindern, dass Flüssigkeit in die Umgebung bzw. in den Lager- bzw. Transport-Ort (Kleidung, Rucksack etc.) ausläuft, und weitere Einrichtungen für andere Zwecke. Ausgehend von einem derartigen Hohlkörper 1 wird erfindungsgemäß eine Beaufschlagung zumindest eines Teils, d. h. eines Teils oder der Gesamtheit, der auf einer Außenfläche 10 aufgebrachten Kunststoff-Beschichtung 20 des Hohlkörpers 1 mit einer außen auf zumindest einem Teil der Beschichtung 20 aufgebrachten und thermofixierten Feststoff-Phototransfer-Schicht 30 vorgeschlagen.

Es kann also der Hohlkörper 1, der beispielsweise, aber nicht beschränkend, eine Flasche sein kann, eine Außenfläche 10 aus Kunststoff haben. Dies kann bedeuten, dass der Hohlkörper 1 bzw. die Flasche vollständig aus Kunststoff hergestellt ist, wie dies in Figur 1B gezeigt ist, oder kann bedeuten, dass der Hohlkörper aus einem anderen Material hergestellt ist, jedoch eine Außenfläche aus Kunststoff hat. Der Kunststoff ist - als Material - nicht auf einen bestimmten Kunststoff beschränkt; es haben sich jedoch erfindungsgemäß Polymere - einzeln, in Mischungen oder als Copolymere - aus der Gruppe Polyolefine (z. B. Polyethylen (PE), Polypropylen (PP), Polybutylen (PB)) und Polyamide (PA) besonders bewährt; deren Molekulargewichte - wie auch die Anordnung der Polymerbausteine (isotaktisch, ataktisch, usw.) können beliebig sein, solange das Polymerprodukt die vorteilhaften Eigenschaften für die Außenfläche eines für Fluide und insbesondere Flüssigkeiten geeigneten Hohlkörpers 1 wie beispielsweise einer Flasche aufweist.

In einer alternativen Ausführungsform der Erfindung kann der Hohlkörper 1 bzw. die Flasche ein Hohlkörper 1 mit einer Außenfläche 10 aus einem anderen Material oder Material-Verbund wie z. B. aus Metall oder aus einem Metall-Kunststoff-Verbund oder aus einer Metall-Kunststoff-Mischung oder aus Kunststoff sein, der außen auf zumindest einem Teil der Außenfläche 10, vorzugsweise auf der gesamten Außenfläche 10, eine aufgebrachte Beschichtung 20 aus einem Polymer-Pulver oder einer Metall-Polymer-Pulver-Mischung aufweist.

Eine derartige Beschichtung 20 ist als solche bekannt und kann auf beliebigem Weg auf die Außenfläche 10 aufgebracht sein. Erfindungsgemäß hat sich besonders bewährt, die Beschichtung 20 in Pulverform auf die Außenfläche 10 aufzubringen, beispielsweise mit Vorteil durch Aufsprühen eines Polymer-Pulvers oder eines Polymer-Metall-Pulvers unter triboelektrischen Bedingungen, also Aufsprühen eines mit einer Ladung versehenen Polymer-Pulvers oder Polymer-Metall-Pulvers auf die gegensätzlich geladene Außenfläche 10 des Hohlkörpers 1, und anschließendes Ausbilden einer festen Polymer-Beschichtung 20 oder Polymer-Metall-Beschichtung 20 unter Einbrennen, also bei hoher Temperatur, und anschließendes Abkühlen.

In einer bevorzugten Ausführungsform der Erfindung umfasst der Hohlkörper 1, dass die Außenfläche 10 oder die Beschichtung 20 ein oder mehrere Metall(e) aus der Gruppe Aluminium, Aluminium-Legierung(en), Eisen und EisenLegierung(en) umfasst, wobei eines oder mehrere der Metalle und/oder Legierungen zugegen sein können, und/oder ein oder mehrere Polymer(e) aus der Gruppe Polyolefine (bevorzugt Polypropylen, PP, oder Polybutylen, PB) und Polyamide (PA), umfasst. Es hat sich nämlich herausgestellt, dass die genannten Metalle und die bevorzugten Polymere PP und PA, letztere besonders bevorzugt Polyamide aus der Gruppe der Polyalkylencarbonsäureamide, besonders gute Grundlagen für die spätere Aufbringung einer Pulver-Polymer-Beschichtung und die nachfolgende Beaufschlagung mit einer Feststoff-Phototransfer-Schicht 30 bilden können.

Weiter ist erfindungsgemäß ein photobeaufschlagter Hohlkörper 1 bevorzugt, bei dem die Beschichtung 20 aus einem Polymer-Pulver auf die gesamte Auβenfläche 10 aus Metall oder aus einem Metall-Kunststoff-Verbund oder aus einer Metall-Kunststoff-Mischung oder aus Kunststoff aufgebracht ist. Denn mit dieser Ausführungsform wird eine einheitliche Grundlage für die nachfolgende Beaufschlagung mit der Feststoff-Phototransfer-Schicht 30 bereitgestellt. Weiter sind solche Hohlkörper 1 erfindungsgemäß besonders bevorzugt, bei denen das Polymer-Pulver der Beschichtung 20 ein Polymer aus der Gruppe Polyester, umfasst. Mit Vorteil verwendbare Polyester-Pulver sind solche auf Basis von (gegebenenfalls -OH-Gruppen enthaltenden) Polyalkylencarbonsäureestern aliphatischer und/oder aromatischer Carbonsäuren, und weiter bevorzugt sind Polyester-Pulver des Handels-Produktes DRYLAC Serie 29 der Firma Tigerwerk Lack- und Farbenfabrik GmbH & Co. KG, Wels, Österreich, denn sie liefern eine besonders zuverlässige Grundlagen-Beschichtung für die später aufgebrachte und thermofixierte Feststoff-Phototransfer-Schicht 30.

Gemäß einer weiter bevorzugten Ausführungsform der Erfindung ist bei dem Hohlkörper 1 die thermofixierte Feststoff-Phototransfer-Schicht 30 auf einem Teil des Hohlkörpers (1) aufgebracht ist. Aus praktischen und vornehmlich durch ästhetische Überlegungen bestimmten Gründen ist nämlich nicht der gesamte Hohlkörper 1 mit der thermofixierten Feststoff-Phototransfer-Schicht 30 beaufschlagt, sondern beispielsweise nur der durch die zylindrische Form bestimmte Teil (siehe dazu die beiden Skizzen der Figuren 2 und 3),

Weiter umfasst dieser Teil besonders bevorzugt eine Siliconöl-haltige Fixierung, wobei das Fixieröl vorzugsweise ein wärmebeständiges Öl aus der Gruppe der Polydialkylsiloxane, weiter bevorzugt ein Polydimethylsiloxan umfassendes oder allein aus Polydimethylsiloxan bestehendes Fixieröl, beispielsweise das Produkt der Firma Xerox GmbH, Neuss, mit der Bezeichnung DocuColor 5000 (oder 6000 oder 7000) Digital Press Fuser Oil, ist, oder einen EA-Trockentoner (Emulsion Aggregation Trockentoner) umfasst. In einer besonders bevorzugten Ausführungsform ist der EA-Trockentoner ein nahezu kugelförmige Toner-Teilchen mit einem von einer Kunstharzschale und einer Wachsschicht umgebenen Pigmentkem aus Pigmenten, Additiven und Kunstharz umfassendes Toner-Material (wie es beispielsweise beschrieben ist in einer im Januar 2003 von J. O'Rurke, XSBG, publizierten Veröffentlichung mit dem Titel "Supplies White Paper - EA (Emulsion Aggregation) Toner") und erhältlich ist von der Firma Xerox GmbH, Neuss, unter der Bezeichnung "Toner Schwarz, Produktcode 006R90280 oder 006R90289 oder 006R90346 oder 006R01251 ". Insbesondere der EM-Trockentoner eignet sich gut aufgrund der Tatsache, dass seine regelmäßigen runden Tonerteilchen eine besonders exakte Übertragungsrate der Feststoff-Phototransfer-Schicht 30 gute Fixierung auf der Schicht 30 auf der darunter liegenden Polymer-Schicht bzw. insbesondere Polyester-Schicht zulassen, für realistische, klare und unverschwommene Drucke der verwendeten Photographien auf dem Hohlkörper 1 und ist dadurch den bisherigen Photodrucken an Exaktheit und Klarheit weit überlegen.

Nachfolgend wird das erfindungsgemäße Verfahren zur Herstellung eines photobeaufschlagten Hohlkörpers 1 beschrieben. Das Verfahren umfasst erfindungsgemäß die folgenden Schritte:
- Beschichten eines Hohlkörpers 1 mit einer Außenfläche 10 aus Kunststoff, aus Metall, einem Metall-Kunststoff-Verbund oder aus einer Metall-Kunststoff-Mischung auf zumindest einem Teil der Außenfläche 10 mit einer Beschichtung 20 aus einem Polymer-Pulver oder einer Metall-Polymer-Pulver-Mischung;
- Erstellen des Photo-Transfers durch Ausdrucken eines photographischen Motivs mittels üblicher Technologie, vorzugsweise unter Venivendung Siliconöl-haltiger Fixierung oder eines EA - (Emulsion Aggregation)
- Trockentoners auf einem Träger 35 unter Bereitstellung einer Feststoff-Phototransfer-Schicht 30;
- mechanisches Fixieren des mit dem photographischen Motiv beaufschlagten Trägers 35 auf zumindest einem Teil der Beschichtung 20 ;
- Wärmefixieren der Feststoff-Phototransfer-Schicht 30 des photographischen Motivs auf dem Teil der Beschichtung 20;
- Abziehen des Trägers 35 von der auf der Beschichtung 20 fixierten Feststoff-Phototransfer-Schicht 30; und
- Einbrennen der Feststoff-Phototransfer-Schicht 30.

Auch bei der Beschreibung des Verfahrens ist der Hohlkörper 1 ein beliebiger Hohlkörper 1, wie er zum Aufbewahren, Transportieren, Isolieren, Verwenden (z.B. Trinken, Kühlen, Erwärmen usw.) einer fluiden Substanz wie beispielsweise einer Flüssigkeit üblicherweise verwendet wird. Dazu wird auf die obige Beschreibung verwiesen. Auch das Verfahren wird nachfolgend unter Bezugnahme auf eine Flasche 1, wie sie beispielhaft in den Figuren 1A und 1B gezeigt ist, insbesondere unter Bezugnahme auf eine Trinkflasche 1, die auch zum Transport von Flüssigkeiten verwendet werden kann, beschrieben, ist jedoch nicht auf Flaschen als Hohlkörper 1 beschränkt; es können genauso gut andere Hohlkörper 1 wie beispielsweise Getränke-Dosen oder noch andere Hohlkörper in Betracht gezogen werden, ohne dass der Fachmann einer Beschränkung unterliegt. Besonders bevorzugt wird ein Hohlkörper 1 in Form einer Flasche, insbesondere einer Trink- oder Transportflasche, gegebenenfalls mit üblichen Einrichtungen 40 zum Halten oder Aufbewahren oder Transportieren oder Isolieren einer Flüssigkeit und einer üblichen Verschluß-Einrichtung 45, verwendet.

Im ersten Schritt wird die Außenfläche 10 des Hohlkörpers 1 bzw. der Flasche 1, aus Kunststoff, aus Metall, einem Metall-Kunststoff-Verbund oder aus einer Metall-Kunststoff-Mischung, auf zumindest einem Teil der Fläche und besonders bevorzugt vollständig mit einer Beschichtung 20 aus einem Polymer-Pulver beaufschlagt. Das Pulver des Polymers ist weiter bevorzugt ein Pulver eines Polymers aus der Gruppe Polyester, die sich als Beschichtung besonders geeignet herausgestellt haben. Mit Vorteil verwendbare Polyester-Pulver sind solche auf Basis von (gegebenenfalls -OH-Gruppen enthaltenden) Polyalkylencarbonsäureestern aliphatischer und/oder aromatischer Carbonsäuren Mit besonderem Vorteil wird das Handelsprodukt DRYLAC 029 der Firma Tigerwerk Lack- und Farbenfabrik GmbH & Co. KG, Wels, Österreich, verwendet bei dem es sich um eine pulverförmige Zubereitung auf Polyester-Basis handelt.

Eine derartige Beschichtung 20 ist als solche bekannt und kann auf beliebigem Weg auf die Außenfläche 10 aufgebracht werden. Erfindungsgemäß hat sich besonders bewährt, die Beschichtung 20 in Pulverform auf die Außenfläche 10 des Hohlkörpers 1 aufzubringen, beispielsweise mit Vorteil durch Aufsprühen eines Polymer-Pulvers oder eines Polymer-Metall-Pulvers unter triboelektrischen Bedingungen, also Aufsprühen eines mit einer Ladung versehenen Polymer-Pulvers oder Polymer-Metall-Pulvers auf die gegensätzlich geladene Auβenfläche 10 des Hohlkörpers 1, und anschließendes Ausbilden einer festen Polymer-Beschichtung 20 oder Polymer-Metall-Beschichtung 20 unter Einbrennen, also bei hoher Temperatur, und anschließendes Abkühlen.

Wird in einer alternativen Ausführungsform der Erfindung ein Hohlkörper 1 mit einer Außenfläche 10 aus Kunststoff oder ein ganz aus Kunststoff gefertigter Hohlkörper 1 verwendet, wie er in Figur 1B gezeigt ist, beispielsweise ein aus PP oder PA gefertigter oder mit einer Außenfläche 10 aus PP oder PA versehener Hohlkörper 1, wird die Außenfläche 10 in dem Fachmann bekannter Weise vorbehandelt, vorzugsweise durch Wärmebehandlung oder durch Corona-Behandlung.

Parallel dazu wird ein sogenannter "Photo-Transfer" erstellt, also eine Kombination eines von einer photographischen Vorlage abgedruckten Motivs mit einem geeigneten Träger. Die Erstellung des Photo-Transfers ist ein im Druckwesen mit üblicher Technologie durchführbares Verfahren. Dabei wird beispielsweise mit einem üblichen Laser-Drucker eine photographische Vorlage wie beispielsweise eine Photographie, ein Logo, eine Werbebotschaft, oder eine sonstige Vorlage auf einen allein zu Übertragungszwecken dienenden Träger gedruckt. Damit die Vorlage später realistisch auf dem Hohlkörper 1 erscheint, muß sie seitenverkehrt auf den Träger gedruckt werden.

Für einen solchen Druck wird als Träger des Photo-Transfers vorzugsweise Papier verwendet, weiter bevorzugt mit dem Ziel einer guten Ablösbarkeit beim späteren Übertragungsvorgang beschichtetes Papier, beispielsweise ein mit einem Polymer wie beispielsweise einem Polyolefin beschichtetes Papier. Besonders hat sich praktisch das Papier der Firma Transfer, Hamburg, mit der Bezeichnung C500 bewährt.

Erfindungsgemäß bevorzugt ist ein Verfahren, bei dem als das Fixieröl ein wärmebeständiges Öl aus der Gruppe der Polydialkylsiloxane, weiter bevorzugt ein Polydimethylsiloxan umfassendes oder allein aus Polydimethylsiloxan bestehendes Fixieröl, beispielsweise das Produkt der Firma Xerox GmbH, Neuss, mit der Bezeichnung DocuColor 5000 (oder 6000 oder 7000) Digital Press Fuser Oil, verwendet wird.

In einer anderen bevorzugten Ausführungsform, die normalerweise alternativ zu der vorstehend beschriebenen zum Einsatz kommt, wird als EA-Trockentoner ein nahezu kugelförmige Toner-Teilchen mit einem von einer Kunstharzschale und einer Wachsschicht umgebenen Pigmentkem aus Pigmenten, Additiven und Kunstharz umfassendes Toner-Material ist. Ein solcher Trockentoner ist beispielsweise von der Firma Fuji-Xerox, Japan, oder von der Firma Xerox GmbH, Neuss, (wie oben beschrieben) im Handel und hat sich zum optimalen Fixieren des Toners auf dem Transfer-Träger (z. B. Papier) bestens bewährt.

Im nächsten Verfahrensschritt wird der erstellte Photo-Transfer, also der mit dem photographischen Motiv beaufschlagte Träger 35, auf zumindest einem Teil des Hohlkörpers 1 bzw. der Flasche 1 in der Weise fixiert, dass die Seite mit dem aus Toner gebildeten photographischen Motiv auf der fixierten Beschichtung 20 zu liegen kommt. Das mechanische Fixieren erfolgt vorzugsweise derart, dass man am oberen und unteren Ende zwei oder mehrere Haltepunkte vorsieht, die beispielsweise - aber nicht beschränkend - hitzebeständige Aufkleber sein können. Auf diese Weise wird die genaue Stelle auf der Oberfläche des Hohlkörpers 1 bzw. der Flasche 1 vorgegeben, auf der sich beim fertigen Produkt die photographische Abbildung befinden soll. Daher kommt es bei diesem Schritt auf eine saubere und genaue Ausrichtung des erstellten Photo-Transfers auf der Unterlage an. Besonders geeignet als Fixierungsmittel sind die vorgenannten hitzebeständigen Aufkleber.

Im nächsten Verfahrensschritt erfolgt ein Wärmefixieren der Feststoff-Phototransfer-Schicht 30 des photographischen Motivs auf dem Teil der Beschichtung 20. Die Wärmefixierung kann mit jeder dem Fachmann für einen solchen Zweck bekannten Technologie erfolgen und bedarf insbesondere der gleichmäßigen Aufbringung von thermischer Energie auf der gesamten zur Übertragung vorgesehenen Fläche und gleichzeitig der Aufbringung eines gewissen (wenn auch nicht hohen) Übertragungsdrucks, um einen Transfer des Tonerbildes 30 von dem Träger 35 auf zumindest eine Teil der Beschichtung 20 zu bewirken. Das Erwärmen der Feststoff-Phototransfer-Schicht 30 des photographischen Motivs zur Übertragung auf zumindest einen Teil der Beschichtung 20 erfolgt vorzugsweise durch Aufbringen von thermischer Energie gleichmäßig von allen Seiten, um zu verhindern, dass ein Teil des Toner-Bildes nicht "anschmilzt" und dann nicht auf die Beschichtung 20 übergeht.

Erfindungsgemäß bevorzugt haben sich für diesen Zweck zylindrische Heiz-Manschetten bewährt, wie sie im Handel erhältlich sind oder auch für die erfindungsgemäßen Zwecke optimiert und angepasst werden können. Beispielsweise sind Größen solcher Heiz-Manschetten solche für runde Hohlkörper 1 bzw. Flaschen 1 mit einem Durchmesser von 60, 80 oder 100 mm. Die Heiz-Manschetten bestehen im wesentlichen aus einer Silicon-Heizmatte, beispielsweise einer Stärke von 10 mm, die bei üblichen Spannungen betrieben werden kann und auf der Vorrichtung von einer Metall-Manschette umgeben ist. Vorzugsweise lassen sich solche Heizmanschetten hinsichtlich der Temperatur exakt steuern, beispielsweise mit einem Thermofühler, und ermöglichen dadurch, dass man auf alle Übertragungs-Stellen eine genau dosierte, vorzugsweise auf den speziellen Toner abgestimmte Menge an Wärme aufbringt und gleichzeitig eine genaue Lokalisierung der Übertragung sicherstellt. Dies ist die wesentliche Voraussetzung für die photorealistische Bild-Übertragung unter Erhalt eines klaren, keine Unschärfen aufweisenden realistischen Photos auf der Oberfläche des Hohlkörpers 1 bzw. der Flasche 1.

In einer besonders bevorzugten Ausführungsform der Erfindung weist eine derartige Heizmanschette neben Einrichtungen zur exakten Temperatur-Messung am Übertragungs-Ort des Tonerbildes, beispielsweise neben geeigneten Thermofühlem, auch Einrichtungen zum exakten Messen der Erwärmungszeit und einer im Zusammenhang damit erwünschten Schaltung zum Ein- und Ausschalten der Energiezufuhr. Besonders bevorzugt erfolgt eine solche Schaltung in Verbindung mit der Messung der Erwärmungszeit digital und ist für den Fachmann auf diesem Gebiet Stand der Technik, der hier keiner weiteren Erläuterung bedarf. Darüber hinaus gehört die Vorrichtung, mit der der Transfer-Schritt durchgeführt werden kann, zur üblichen Technologie, ist dem Fachmann bekannt und bedarf daher in dieser Stelle keiner weiteren Erläuterung.

In besonders bevorzugten Ausführungsformen der Erfindung erfolgt das Wärmefixieren der Feststoff-Phototransfer-Schicht 30 des photographischen Motivs auf dem Teil der Beschichtung 20 erfolgt durch Erwärmen auf eine Temperatur im Bereich von 100 bis 250 °C und/oder für eine Zeit von 10 bis 500 s, vorzugsweise durch Erwärmen auf eine Temperatur im Bereich von 150 bis 220 °C und/oder für eine Zeit von 30 bis 300 s, weiter bevorzugt durch Erwärmen auf eine Temperatur im Bereich von 160 bis 200 °C und/oder für eine Zeit von 50 bis 200 s. Die genauen Parameter dieses Schrittes sind von zentraler Bedeutung für das Ziel, einen klaren Druck auf dem Hohlkörper bzw. der Flasche 1 zu erhalten, und sind von dem verwendeten Polymer-Pulver und dem für die Feststoff-Phototransfer-Schicht 30 verwendeten Toner abhängig, können jedoch im Detail vom Fachmann im Rahmen weniger orientierender Vorversuche bestimmt werden, ohne dass es hierzu als solches einer erfinderischen Tätigkeit bedarf. Auch stehen Übertragungszeit und angewendete Temperatur zumindest in einem gewissen "Fenster" der beiden Parameter in einem wechselseitigen Abhängigkeitsverhältnis, und niedrigere Temperaturen können bei gleichen Stoffparametern von Polymer der Grundschicht 20 und Toner-Polymer in der Feststoff-Phototransfer-Schicht 30 eine längere Übertragungszeit bewirken, und umgekehrt eine höhere Temperatur eine kürzere Übertragungszeit.

Nach der Wärmefixierung wird im nächsten Schritt der für den Transfer verwendete Träger (z. B. das Papier) von der Oberfläche des Hohlkörpers 1 bzw. der Flasche 1 entfernt. Dies kann automatisch oder manuell geschehen und geschieht besonders bevorzugt automatisch.

Der nächste - aus Sicht der Erfindung optionale, jedoch mit Vorteil durchgeführte - Verfahrensschritt ist ein Schritt des Abkühlens des mit dem Photo beaufschlagten und von dem Träger 35 befreiten Hohlkörpers 1. Der Kühlvorgang kann entweder ein aktiver Kühlvorgang sein, bei dem die Wärme durch geeignete Mittel aktiv abgeführt wird (Gebläse, Durchführen durch eine Kühlzone etc.), oder kann ein passiver Kühlvorgang sein, bei dem man den entstandenen Verbund eine kühlenden Umgebung aussetzt und dadurch abkühlen lässt. Weiter bevorzugt ist ein passiver Kühlvorgang auf eine Temperatur von dem halben Wert der Temperatur des Wärmefixier-Schrittes und - weiter bevorzugt - auf eine Temperatur im Bereich von 50 bis 80 °C oder Raumtemperatur von etwa 10 bis 25 °C, gegebenenfalls unter Nutzung der Abwärme zum Aufwärmen an anderer Stelle des Verfahrens.

Als abschließender Schritt des Verfahrens folgt ein Einbrennen der Feststoff-Phototransfer-Schicht 30 mit dem Ziel einer Verbesserung der Härte und mechanischen Beständigkeit des übertragenen photographischen Bildes. Auch dieser Schritt ist von der verwendeten Beschichtung 20 und dem Material des Toners der Feststoff-Phototransfer-Schicht 30 abhängig und unterliegt einer gewissen Wechselwirkung mit der Einbrennzeit. In bevorzugten Ausführungsformen der Erfindung erfolgt das Einbrennen der Feststoff-Phototransfer-Schicht (30) bei einer Temperatur oberhalb des Wärmefixier-Schritts, weiter vorzugsweise bei einer Temperatur von 150 bis 300 °C und/oder für eine Zeit von 2 bis 20 min; noch mehr bevorzugt bei einer Temperatur von 160 bis 250°C und/oder für eine Zeit von 5 bis 16 min; und ganz besonders bevorzugt bei einer Temperatur von 170 bis 210 °C und/oder für eine Zeit von 8 bis 12 min. Auch hier kann der Fachmann eine Anpassung der Parameter durch wenige optimierende und keine erfinderische Tätigkeit erfordernde Vorversuche erreichen.

In einer weiteren bevorzugten Ausführungsform der Erfindung, in der als Polymer für die Beschichtung 20 ein dunkel gefärbtes Material verwendet wird, kann aus optischen Gründen die aufzufixierende Feststoff-Phototransfer-Schicht 30 mit einem hellen Hintergrund oder eine hellen Kontur hinterlegt wird, was besonders bevorzugt im Siebdruck-Verfahren geschieht. In diesem Fall wird diese helle Hintergrundschicht oder-Kontur auf die Photo-Transfer-Schicht ganz zum Schluß (also quasi "obendrauf") aufgebracht wird, da sie ja bei der (umgekehrten) Aufbringung auf die Beschichtung 20 auf der Flasche einen hellen Hintergrund ergeben soll. Nach dem Transfer ist diese Schicht dann der Beschichtung 20 unmittelbar benachbart und wirkt so als heller "Hintergrund" des Bildes.

Die nach dem vorstehend im Detail beschriebenen Verfahren hergestellten Hohlkörper 1 bzw. Flaschen 1 können für viele Zwecke verwendet werden. So können auf diesem Wege - um bei dem bevorzugten Beispiel von Flaschen zu bleiben - Flaschen eines sonst einheitlichen Aussehens individualisiert werden, also mit einem Namen oder - beispielsweise für Kinder, die noch nicht lesen können - mit einem leicht wieder erkennbaren Bild versehen werden, so dass jedes Kind seine Flasche gleich erkennt. Alternative Verwendungen sind Werbe-Botschaften, die auf zu Werbezwecken vorgesehenen Flaschen 1 aufgedruckt werden. Gleiches gilt natürlich für Geschenk-Zwecke, bei denen Flaschen 1 mit Motiven der persönlichen Wahl für eine zu beschenkende Person bedruckt werden können.

## Patentansprüche

1. Photobeaufschlagter Hohlkörper (1) mit
• einer Außenfläche (10) aus Kunststoff, aus Metall, einem Metall-Kunststoff-Verbund oder aus einer Metall-Kunststoff-Mischung;
• einer außen auf zumindest einem Teil der Außenfläche (10) aufgebrachten Beschichtung (20) aus einem Polymer-Pulver oder einer Metall-Polymer-Pulver-Mischung; und
• einer außen auf zumindest einem Teil der Beschichtung (20) aufgebrachten und thermofixierten Feststoff-Phototransfer-Schicht (30).

2. Photobeaufschlagter Hohlkörper (1) nach Anspruch 1, worin die Außenfläche (10) oder Beschichtung (20) ein oder mehrere Metall(e) aus der Gruppe Aluminium, Aluminium-Legierung(en), Eisen und Eisen-Legierung(en) umfasst.

3. Photobeaufschlagter Hohlkörper (1) nach Anspruch 1 oder Anspruch 2, worin die Außenfläche (10) oder Beschichtung (20) ein oder mehrere Polymer(e) aus der Gruppe Polyolefine (bevorzugt Polyethylen, PE, oder Polypropylen, PP, oder Polybutylen, PB) und Polyamide (PA) umfasst.

4. Photobeaufschlagter Hohlkörper (1) nach einem der Ansprüche 1 bis 3, worin die Beschichtung (20) auf die gesamte Außenfläche (10) aufgebracht ist.

5. Photobeaufschlagter Hohlkörper (1) nach einem der Ansprüche 1 bis 4, worin das Polymer-Pulver der Beschichtung (20) ein Polymer aus der Gruppe Polyester umfasst.

6. Photobeaufschlagter Hohlkörper (1) nach einem der Ansprüche 1 bis 5, worin das Polymer-Pulver der Beschichtung (20) ein Pulver eines Polyesters aus der Gruppe von (gegebenenfalls -OH-Gruppen enthaltenden) Polyalkylencarbonsäureestern aliphatischer und/oder aromatischer Carbonsäuren umfasst.

7. Photobeaufschlagter Hohlkörper (1) nach einem der Ansprüche 1 bis 6, worin die thermofixierte Feststoff-Phototransfer-Schicht (30) auf einem Teil der Beschichtung (20) aufgebracht ist.

8. Photobeaufschlagter Hohlkörper (1) nach einem der Ansprüche 1 bis 7, worin die thermofixierte Feststoff-Phototransfer-Schicht (30) einen EA-Trockentoner umfasst.

9. Photobeaufschlagter Hohlkörper (1) nach einem der Ansprüche 1 bis 8, worin die thermofixierte Feststoff-Phototransfer-Schicht (30) mit einer Siliconöl-haltigen Fixierung fixiert ist.

10. Photobeaufschlagter Hohlkörper (1) nach einem der Ansprüche 1 bis 9 in Form einer Flasche, insbesondere einer Trink- oder Transportflasche mit üblichen Einrichtungen (40) zum Halten oder Aufbewahren oder Transportieren einer Flüssigkeit und einer üblichen Verschluß-Einrichtung (45).

11. Verfahren zum Herstellen eines photobeaufschlagten Hohlkörpers (1) nach einem der Ansprüche 1 bis 10, wobei das Verfahren die folgenden Schritte umfaßt:
• Beschichten eines Hohlkörpers (1) mit einer Außenfläche (10) aus Kunststoff, aus Metall, einem Metall-Kunststoff-Verbund oder aus einer Metall-Kunststoff-Mischung auf zumindest einem Teil der Außenfläche (10) mit einer Beschichtung (20) aus einem Polymer-Pulver oder einer Metall-Polymer-Pulver-Mischung;
• Erstellen des Photo-Transfers durch Ausdrucken eines photographischen Motivs mittels üblicher Technologie, vorzugsweise unter Verwendung einer Siliconöl-haltigen Fixierung oder eines EA-Trockentoners auf einem Träger (35) unter Bereitstellung einer Feststoff-Phototransfer-Schicht (30);
• mechanisches Fixieren des mit dem photographischen Motiv beaufschlagten Trägers (35) auf zumindest einem Teil der Beschichtung (20);
• Wärmefixieren der Feststoff-Phototransfer-Schicht (30) des photographischen Motivs auf dem Teil der Beschichtung (20);
• Abziehen des Trägers (35) von der auf der Beschichtung (20) fixierten Feststoff-Phototransfer-Schicht (30); und
• Einbrennen der Feststoff-Phototransfer-Schicht (30).

12. Verfahren nach Anspruch 11, worin als Hohlkörper (1) ein Hohlkörper (1) in Form einer Flasche, insbesondere einer Trink- oder Transportflasche, gegebenenfalls mit üblichen Einrichtungen (40) zum Halten oder Aufbewahren oder Transportieren einer Flüssigkeit und einer üblichen Verschluß-Einrichtung (45), verwendet wird.

13. Verfahren nach Anspruch 11 oder Anspruch 12, worin die Außenfläche (10) auf zumindest einem Teil, vorzugsweise vollständig, mit einer Beschichtung (20) aus einem Polymer aus der Gruppe Polyester beaufschlagt wird.

14. Verfahren nach einem der Ansprüche 11 bis 13, worin das Polymer-Pulver der Beschichtung (20) ein Pulver eines Polyesters aus der Gruppe von (gegebenenfalls -OH-Gruppen enthaltenden) Polyalkylencarbonsäureestern aliphatischer und/oder aromatischer Carbonsäuren umfasst.

15. Verfahren nach einem der Ansprüche 11 bis 14, worin das Beaufschlagen der Außenfläche (10) mit der Beschichtung (20) aus einem Pulver eines Polyester-Polymers erfolgt durch Aufsprühen des Polymer-Pulvers unter triboelektrischen Bedingungen und Einbrennen des Polymers auf der Außenfläche (10).

16. Verfahren nach Anspruch 11, worin man den Hohlkörper (1) mit einer Außenfläche (10) aus Kunststoff vorbehandelt, vorzugsweise durch Wärmebehandlung oder Corona-Behandlung der Außenfläche (10).

17. Verfahren nach einem der Ansprüche 11 bis 16, worin als Träger der Photo-Transfers Papier, vorzugsweise beschichtetes Papier, weiter bevorzugt Polymer-beschichtetes Papier, verwendet wird.

18. Verfahren nach einem der Ansprüche 11 bis 17, worin als das Fixieröl ein wärmebeständiges Öl aus der Gruppe der Polydialkylsiloxane, weiter bevorzugt ein Polydimethylsiloxan umfassendes oder allein aus Polydimethylsiloxan bestehendes Fixieröl verwendet wird.

19. Verfahren nach einem der Ansprüche 11 bis 18, worin der EA-Trockentoner ein nahezu kugelförmige Toner-Teilchen mit einem von einer Kunstharzschale und einer Wachsschicht umgebenen Pigmentkern aus Pigmenten, Additiven und Kunstharz umfassendes Toner-Material ist.

20. Verfahren nach einem der Ansprüche 11 bis 19, worin das mechanische Fixieren des mit dem photographischen Motiv beaufschlagten Trägers (35) auf zumindest einem Teil der Beschichtung (20) erfolgt durch Anbringung von mehreren Haltepunkten, vorzugsweise in Form hitzebeständiger Aufkleber.

21. Verfahren nach einem der Ansprüche 11 bis 20, worin das Wärmefixieren der Feststoff-Phototransfer-Schicht (30) des photographischen Motivs auf dem Teil der Beschichtung (20) erfolgt durch Erwärmen des mit dem mechanisch fixierten Photo-Transfer versehenen Hohlkörpers (1) von allen Seiten, vorzugsweise mit einer Heiz-Manschette, weiter bevorzugt mit einer Temperatur-genau steuerbaren Heiz-Manschette.

22. Verfahren nach einem der Ansprüche 11 bis 21, worin das Wärmefixieren der Feststoff-Phototransfer-Schicht (30) des photographischen Motivs auf dem Teil der Beschichtung (20) erfolgt durch Erwärmen auf eine Temperatur im Bereich von 100 bis 250 °C und/oder für eine Zeit von 10 bis 500 s, vorzugsweise durch Erwärmen auf eine Temperatur im Bereich von 150 bis 220 °C und/oder für eine Zeit von 30 bis 300 s, weiter bevorzugt durch Erwärmen auf eine Temperatur im Bereich von 160 bis 200 °C und/oder für eine Zeit von 50 bis 200 s.

23. Verfahren nach einem der Ansprüche 11 bis 22, worin der Hohlkörper (1), vorzugsweise die Flasche (1), nach dem Brennvorgang und dem Abziehen des Trägers (35) gekühlt wird, vorzugsweise aktiv oder passiv gekühlt wird, weiter bevorzugt einem Vorgang des Abkühlens auf eine Temperatur von dem halben Wert der Wärmefixier-Temperatur überlassen wird ("passives Kühlen"), noch weiter bevorzugt auf eine Temperatur im Bereich von 50 bis 80 °C.

24. Verfahren nach einem der Ansprüche 11 bis 23, worin das Einbrennen der Feststoff-Phototransfer-Schicht (30) bei einer Temperatur oberhalb des Wärmefixier-Schritts erfolgt, vorzugsweise bei einer Temperatur von 150 bis 300 °C und/oder für eine Zeit von 2 bis 20 min; weiter bevorzugt bei einer Temperatur von 160 bis 250 °C und/oder für eine Zeit von 5 bis 16 min; noch weiter bevorzugt bei einer Temperatur von 170 bis 210 °C und/oder für eine Zeit von 8 bis 12 min.

25. Verfahren nach einem der Ansprüche 11 bis 24, worin für Hohlkörper (1) bzw. Flaschen (1) mit dunkler Beschichtung (20) die aufzufixierende Feststoff-Phototransfer-Schicht (30) mit einem hellen Hintergrund oder einer hellen Kontur hinterlegt wird, vorzugsweise im Siebdruck-Verfahren.

26. Verwendung des Hohlkörpers (1) nach einem der Ansprüche 1 bis 10 sowie des nach dem Verfahren der Ansprüche 11 bis 25 herstellbaren Hohlkörpers (1) für Werbe-Zwecke, zur Individualisierung und für Geschenk-Zwecke.

## Claims

1. Photo-applicable hollow body (1) having
- an outer surface (10) made of plastics, of metal, of a metal-plastics composite or of a metal-plastics blend;
- a coating (20) applied to the outside on at least a part of the outer surface (10) and made of a polymer powder or of a metal polymer powder blend; and
- a solid photo transfer layer (30) applied on the outside on at least a part of the coating (20) and fixed by thy application of heat.

2. Photo-applicable hollow body (1) according to claim 1, wherein the outer surface (10) or the coating (20) comprises one or several metal(s) selected from the group consisting of aluminum, aluminum alloy(s), iron and iron alloy(s).

3. Photo-applicable hollow body (1) according to claim 1 or claim 2, wherein the outer surface (10) or the coating (20) comprises one or several polymer(s) selected from the group of polyolefins (preferable polyethylene, PE, or polypropylene, PP or polybutylene, PB) and polyamides (PA).

4. Photo-applicable hollow body (1) according to any of the claims 1 to 3, wherein the coating (20) is provided on the whole outer surface (10).

5. Photo-applicable hollow body (1) according to any of the claims 1 to 4, wherein the polymer powder of the coating (20) comprises a polymer selected from the group of polyesters.

6. Photo-applicable hollow body (1) according to any of the claims 1 to 5, wherein the polymer powder of the coating (20) comprises a powder of a polyester selected from the group of polyalkylene, carboxylic acid esters of aliphatic and/or aromatic carboxylic acids (optionally containing -OH groups).

7. Photo-applicable hollow body (1) according to any of the claims 1 to 6, wherein the solid photo transfer layer (30) fixed by the application of heat is applied to a part of the coating (20).

8. Photo-applicable hollow body (1) according to any of the claims 1 to 7, wherein the solid photo transfer layer (30) fixed by the application of heat comprises a dry EA-toner.

9. Photo-applicable hollow body (1) according to any of the claims 1 to 8, wherein the solid photo transfer layer (30) fixed by the application of heat is fixed by using a silicone oil-containing fixing agent.

10. Photo-applicable hollow body (1) according to any of the claims 1 to 9 in the shape of a bottle, particularly of a drinking or transport bottle, having common means (40) for retaining or storing or transporting a liquid and having a common locking means (45).

11. A method for manufacturing a photo-applicable hollow body (1) according to any of the claims 1 to 10, said method comprising the following steps:
- coating a hollow body (1) having an outer surface (10) made of plastics, of a metal, of a metal-plastics composite or of a metal-plastics blend on at least a part of the outer surface (10) with a coating (20) consisting of a polymer powder or a metal polymer powder blend;
- establishing a photograph transfer by printing a photographic motive by means of a usual technology, preferably using a silicone oil-containing fixing means or a dry EA-toner, on a carrier (35) to provide a solid photo transfer layer (30);
- mechanically fixing the carrier (35) provided with the photographic motive on at least a part of the coating (20);
- fixing, by the application of heat, said solid photo transfer layer (30), containing said photographic motive, on a part of said coating (20);
- peeling off said carrier (35) from the solid photo transfer layer (30) fixed on said coating (20); and
- baking said solid photo transfer layer (30).

12. The method according to claim 11, wherein a hollow body (1) having the shape of a bottle, in particular of a drinking or transport bottle, optionally having usual means (40) for retaining or storing or transporting a liquid, and having a usual locking means (45) is used as the hollow body (1).

13. The method according to claim 11 or claim 12, wherein the outer surface (10) is provided with a coating (20) of a polymer selected from the group of polyesters at least partly, preferably completely.

14. The method according to any of the claims 11 to 13, wherein the polymer powder of the coating (20) comprises a powder of a polyester selected from the group of polyalkylene carboxylic acid esters of aliphatic and/or aromatic carboxylic acids (optionally containing -OH groups).

15. The method according to any of the claims 11 to 14, wherein the step of providing the outer surface (10) with a coating (20) of a polyester polymer powder is effected by spraying the polymer powder, while applying triboelectric conditions, and baking the polymer on the outer surface (10).

16. The method according to claim 11, wherein the hollow body (1) having an outer surface (10) of plastics is pre-treated, preferably by heat treatment or corona treatment of the outer surface (10).

17. The method according to any of the claims 11 to 16, wherein paper, preferably coated paper, more preferably polymer-coated paper, is used as the carrier of the photo transfer.

18. The method according to any of the claims 11 to 17, wherein a thermally stable oil selected from the group of polydialkyl siloxanes, more preferably a fixing oil comprising a polydimethyl siloxane or exclusively consisting of a polydimethyl siloxane, is used as the fixing oil.

19. The method according to any of the claims 11 to 18, wherein the dry EA-toner is a toner material comprising almost spherical toner particles having a pigment core consisting of pigments, additives and resin and surrounded by a resin shell and a wax layer.

20. The method according to any of the claims 11 to 19, wherein said mechanical fixing of the carrier (35) provided with the photographic motive on at least a part of the coating (20) is effected by applying several holding points, preferably in the form of heat-resistant adhesive stickers.

21. The method according to any of the claims 11 to 20, wherein the step of fixing, by the application of heat, of said solid photo transfer layer (30) comprising the photographic motive is effected on a part of the coating (20) by heating the hollow body (1), provided with the mechanically fixed photo transfer, on all sides, preferably by using a heating sleeve, more preferably by using a heating sleeve exactly controllable with respect to the temperature.

22. The method according to any of the claims 11 to 21, wherein the step of fixing by the application of heat, of the solid photo transfer layer (30) comprising the photographic motive on a part of the coating (20) is effected by heating to a temperature in the range of 100 to 250 °C and/or for a time of 10 to 500 s, preferably by heating to a temperature in the range of 150 to 220 °C and/or for a time of 30 to 300 s, more preferably by heating to a temperature in the range of 160 to 200 °C and/or for a time of 50 to 200 s.

23. The method according to any of the claims 11 to 22, wherein the hollow body (1), preferably the bottle (1), is cooled after the baking step and the step of peeling off the carrier (35), preferably wherein the hollow body (1) is cooled actively or passively, more preferably is allowed to be subjected to a step of cooling to a temperature having half the value of the heat-fixing temperature ("passive cooling"), even more preferably to a temperature in the range of 50 to 80 °C.

24. The method according to any of the claims 11 to 23, wherein the step of baking the solid photo transfer layer (30) is effected at a temperature above the heat fixing step, preferably at a temperature of 150 to 300 °C and/or for a time of 2 to 20 min; more preferably at a temperature of 160 to 250 °C and/or for a time of 5 to 16 min; even more preferably at a temperature of 170 to 210 °C and/or for a time of 8 to 12 min.

25. The method according to any of the claims 11 to 24, wherein the solid photo transfer layer (30) to be applied by fixing is contrasted with a bright background or a bright contour for hollow bodies (1) or bottles (1), respectively, having a dark coating (20), preferably by applying a screen printing process.

26. A use of the hollow body (1) according to any of the claims 1 to 10 as well as of the hollow body (1) obtainable according to the method of claims 11 to 25 for advertising purposes, for individualization and as present.

## Revendications

1. Corps creux photo-imprimé (1) comprenant
- une surface extérieure (10) en matière synthétique, en métal, à base d'un assemblage métal-matière synthétique ou d'un mélange métal-matière synthétique;
- un revêtement (20) appliqué à l'extérieur sur au moins une partie de la surface extérieure (10) à base d'une poudre de polymère ou d'un mélange métal - poudre de polymère ; et
- une couche de phototransfert de solide (30) appliquée à l'extérieur sur au moins une partie du revêtement (20) et thermofixée.

2. Corps creux (1) photo-imprimé selon la revendication 1, dans lequel la surface extérieure (10) ou le revêtement (20) comprend un métal ou plusieurs métaux choisis dans le groupe aluminium, alliage(s) d'aluminium, fer et alliage(s) de fer.

3. Corps creux (1) photo-imprimé selon la revendication 1 ou la revendication 2, dans lequel la surface externe (10) ou le revêtement (20) comprend un ou plusieurs polymère(s) choisir dans le groupe polyoléfines (de préférence polyéthylène, PE ou polypropylène, PP, ou polybutylène, PB) et polyamides (PA).

4. Corps creux (1) photo-imprimé selon l'une quelconque des revendications 1 à 3, le revêtement (20) étant appliqué sur la surface extérieure (10) globale.

5. Corps creux (1) photo-imprimé selon l'une quelconque des revendications 1 à 4, la poudre de polymère du revêtement (20) comprenant un polymère choisir dans le groupe polyesters.

6. Corps creux (1) photo-imprimé selon l'une quelconque des revendications 1 à 5, dans lequel la poudre de polymère du revêtement (20) comprend une poudre d'un polyester choisir dans le groupe d'esters d'acide carboxylique de polyalkylène (contenant éventuellement des groupes hydroxile) d'acides carboxyliques aliphatiques et/ou aromatiques.

7. Corps creux (1) photo-imprimé selon l'une quelconque des revendications 1 à 6, dans lequel la couche de phototransfert de solide (30) thermofixée est appliquée sur une partie du revêtement (20).

8. Corps creux (1) photo-imprimé selon l'une quelconque des revendications 1 à 7, dans lequel la couche de phototransfert de solide (30) thermofixé comprend un toner sec EA.

9. Corps creux (1) photo-imprimé selon l'une quelconque des revendications 1 à 8, dans lequel la couche de phototransfert de solide (30) thermofixé est fixée avec une fixation à base d'huile de silicone.

10. Corps creux (1) photo-imprimé selon l'une quelconque des revendications 1 à 9 sous forme d'une bouteille, en particulier une bouteille pour boire ou une bouteille de transport avec des dispositifs classiques (40) pour le maintien ou la conservation ou le transport d'un liquide et d'un dispositif de fermeture (45) classique.

11. Procédé pour fabriquer un corps creux (1) photo-imprimé selon l'une quelconque des revendications 1 à 10, le procédé comprenant les étapes suivantes :
- revêtement d'un corps creux (1) doté d'une surface extérieure (10) en matière synthétique, en métal, à base d'un assemblage métal - matière synthétique ou d'un mélange métal - matière synthétique sur au moins une partie de la surface extérieure (10) avec un revêtement (20) à base d'une poudre de polymère ou d'un mélange métal - poudre de polymère ;
- établissement du phototransfert par impression d'un motif photographique au moyen d'une technologie classique, de préférence en utilisant une fixation contenant de l'huile de silicone ou un toner sec EA sur un support (35) en mettant à disposition une couche de phototransfert de solide (30) ;
- fixation mécanique du support (35) sollicité avec le motif photographique sur au moins une partie du revêtement (20) ;
- thermofixation de la couche de photo-transfert de solide (30) du motif photographique sur la partie du revêtement (20) ;
- enlèvement du support (35) de la couche de phototransfert de solide (30) fixée sur le revêtement (20) ; et
- cuisson de la couche de phototransfert de solide (30).

12. Procédé selon la revendication 11, dans lequel un corps creux (1) est utilisé comme creux (1) sous la forme d'une bouteille, en particulier d'une bouteille pour boire ou d'une bouteille de transport, éventuellement avec des dispositifs classiques (40) pour le maintien ou la conservation ou le transport d'un liquide et d'un dispositif de fermeture (45) classique.

13. Procédé selon la revendication 11 ou la revendication 12, dans lequel la surface extérieure (10) est sollicitée sur au moins une partie, de préférence complètement, avec un revêtement (20) à base d'un polymère choisis dans le groupe polyesters.

14. Procédé selon l'une quelconque des revendications 11 à 13, dans laquelle la poudre de polymère du revêtement (20) comprend une poudre d'un polyester choisis dans le groupe d'acides carboxyliques de polyalkylène (contenant éventuellement des groupes hydroxyle) d'acides carboxyliques aliphatiques et/ou aromatiques.

15. Procédé selon l'une quelconque des revendications 11 à 14, dans lequel la sollicitation de la surface externe (10) avec le revêtement (20) à base d'une poudre d'un polymère de polyester s'effectue par pulvérisation de la poudre de polymère dans des conditions triboélectriques et cuisson du polymère sur la surface externe (10).

16. Procédé selon la revendication 11, dans lequel on prétraite le corps creux (1) avec une surface externe (10) à base de matière synthétique, de préférence par traitement thermique ou traitement avec corona de la surface externe (10).

17. Procédé selon l'une quelconque des revendications 11 à 16, dans lequel du papier, de préférence du papier enduit, et de façon encore plus préférentielle du papier enduit de polymère, est utilisé comme support du phototransfert.

18. Procédé selon l'une quelconque des revendications 11 à 17, dans lequel une huile résistante à la chaleur choisis dans le groupe des polydialkylsiloxanes, de préférence une huile de fixation comprenant un polydiméthylsiloxane ou constituée uniquement de polydiméthylsiloxane est utilisée comme huile de fixation.

19. Procédé selon l'une quelconque des revendications 11 à 18, dans lequel le toner sec EA est un matériau de toner comprenant des particules de toner pratiquement sphériques avec un noyau de pigment entouré d'une coque de résine synthétique et d'une couche de cire, constitué de pigments, d'additifs et de résine synthétique.

20. Procédé selon l'une quelconque des revendications 11 à 19, dans lequel la fixation mécanique du support (35) sollicité avec le motif photographique s'effectue sur au moins une partie du revêtement (20) par placement de plusieurs points de retenue, de préférence sous la forme d'autocollants résistants à la chaleur.

21. Procédé selon l'une quelconque des revendications 11 à 20, dans lequel la thermofixation de la couche de phototransfert de solide (30) du motif photographique sur la partie de revêtement (20) s'effectue par réchauffement du corps creux (1) doté du phototransfert fixé mécaniquement par tous les côtés, de préférence avec un manchon de chauffage, avec une préférence plus grande avec un manchon de chauffage pouvant être commandé de façon précise au niveau de la température.

22. Procédé selon l'une quelconque des revendications 11 à 21, dans lequel la thermofixation de la couche de phototransfert de solide (30) du motif photographique sur la partie du revêtement (20) s'effectue par réchauffement à une température de l'ordre de 100 à 250°C et/ou pour une période de 10 à 500 s, de préférence par réchauffement à une température de l'ordre de 150 à 220°C et/ou pour une période de 30 à 300 s, dans une préférence encore plus grande par réchauffement à une température de l'ordre de 160 à 200°C et/ou pour une période de 50 à 200 s.

23. Procédé selon l'une quelconque des revendications 11 à 22, dans lequel le corps creux (1), de préférence la bouteille (1), est refroidi après l'opération de cuisson et l'enlèvement du support (35), est refroidi de préférence de façon active ou passive, avec une préférence plus grande est soumis à une opération de refroidissement jusqu'à une température égale à la demi-valeur de la température de thermofixation ("refroidissement passif"), avec une préférence encore plus grande jusqu'à une température de l'ordre de 50 à 80°C.

24. Procédé selon l'une quelconque des revendications 11 à 23, dans lequel la cuisson de la couche de phototransfert de solide (30) s'effectue à une température supérieure à celle de l'étape de thermofixation, de préférence à une température de 150 à 300°C et/ou pour une période de 2 à 20 mn ; avec une préférence plus grande à une température de 160 à 250°C et/ou pour une période de 5 à 16 mn ; avec une préférence encore plus grande à une température de 170 à 210°C et/ou pour une période de 8 à 12 mn.

25. Procédé selon l'une quelconque des revendications 11 à 24, dans lequel, pour les corps creux (1) ou des bouteilles (1) avec un revêtement (20) sombre, la couche de phototransfert de solide (30) à fixer dessus avec un fond clair ou un contour clair est déposée, de préférence dans le procédé de sérigraphie.

26. Utilisation du corps creux (1) selon l'une quelconque des revendications 1 à 10 ainsi que du corps creux (1) fabriqué selon le procédé des revendications 11 à 25 à des fins publicitaires, pour l'individualisation et pour des cadeaux.
